# EUROPÄISCHE PATENTSCHRIFT

(11) **EP 2 048 344 B1**
(45) Veröffentlichungstag und Bekanntmachung des Hinweises auf die Patenterteilung: **14.01.2015**
(21) Anmeldenummer: 08011152.9
(22) Anmeldetag: 19.06.2008
(51) Int. Cl.: F02K 1/82, F02K 9/97

(54) **Raketen- oder Strahltriebwerk mit Wärmeisolierter Schubdüse**
Jet or rocket engine with heat insulated exhaust nozzle
Moteur à réaction ou à fusée avec tuyère d'éjection isolée thermiquement

(30) Priorität: 10.10.2007 DE 102007048527
(43) Veröffentlichungstag der Anmeldung: 15.04.2009
(73) Patentinhaber: Bayern-Chemie Gesellschaft für flugchemische Antriebe mbH, 84544 Aschau a. Inn (DE)
(72) Erfinder: Oley, Dieter, 91522 Ansbach (DE); Schneeberger, Winfried, 67256 Weisenheim am Sand (DE)
(74) Vertreter: Berngruber, Otto

(56) Entgegenhaltungen:
- WO-A1-03/092946
- WO-A1-2004/043691
- WO-A2-2007/066052
- DE-A1- 4 321 393
- DE-B3- 3 601 957
- GB-A- 2 196 393
- JP-A- 61 053 447
- US-A- 3 122 883
- US-A- 5 476 237
- US-A- 5 855 828

## Beschreibung

Die vorliegende Erfindung bezieht sich auf ein Schubtriebwerk mit einer Schubdüse und einer Brennkammer, insbesondere ein Raketen- oder Stautriebwerk, nach dem Oberbegriff des Patentanspruches 1.

Während bei Raketentriebwerken die durch chemische Umsetzung freiwerdende Energie der Reaktionsprodukte mit Hilfe der an die Brennkammer anschließenden Schubdüse in Strömungsenergie umgewandelt wird, weisen Stautriebwerke eine Lufteintrittsöffnung in einer weitgehend zylinderförmigen Brennkammer auf. In die Brennkammer des Triebwerks wird der flüssige oder gasförmige Treibstoff eingeführt und über einen Lufteinlauf mit Umgebungsluft vermischt. Durch ein Stosswellensystem im Lufteinlauf erreicht die Luft bei ausreichender Geschwindigkeit einen höheren Druck und eine höhere Temperatur am Brennkammereintritt gegenüber den Umgebungsbedingungen und kann somit den Treibstoff abbrennen, sodass die heißen Abbrandprodukte in der Schubdüse expandiert werden können, um den Schub zu erzeugen.

Das Stautriebwerk muss also von einem Starttreibsatz auf Marschfluggeschwindigkeit beschleunigt werden, um einen ausreichenden Schub und einen hohen Verbrennungswirkungsgrad entwickeln zu können. Sowohl für Raketen- als auch für Stautriebwerke ist es notwendig, dass die Schubdüse am Hals während der Marschphase nicht durch Erosion aufgeweitet wird und die Düse extremen Temperaturen von deutlich über 2.000 °C bei einer Wirkdauer von einigen Minuten widersteht.

Zu diesem Zweck kommt eine erosions- und wärmebeständige Schubdüse aus monolithischer oder faserverstärkter Keramik zum Einsatz, wobei die metallische Außenstruktur des Flugkörpers und die daran angeschlossenen elektronischen und mechanischen Steuer- und Regeleinrichtungen des Flugkörpers vor der durch die Verbrennungsgase auf eine extrem hohe Temperatur aufgeheizten Schubdüse über eine Dauer von einigen Minuten zu schützen sind.

Eine Limitierung sowohl durch das maximale Flugkörperkaliber als auch durch den erforderlichen Halsdurchmesser der Schubdüse zur Erreichung der geforderten Triebwerksleistung führt zu einem Bauraum zwischen keramischer Schubdüse und metallischer Außenstruktur im Millimeterbereich. Aus diesem Grund muss die Wärmeisolierung so optimiert sein, dass sie unter Ausnutzung geringsten Volumens die Aufheizung der Außenstruktur so weit reduziert, dass über die gesamte Marschflugphase die Funktion der Steuer- und Regeleinrichtungen des Flugkörpers sowie die strukturelle Integrität der Flugkörperstruktur sichergestellt ist.

In Folge dieses notwendiger Weise volumenbeschränkten Einbaus zwischen Schubdüse und Außenstruktur bereitet es erhebliche Schwierigkeiten, die Wärmeisolationsschicht so anzubringen, dass eine über ihre gesamte Fläche gleichmäßig hohe Wärmeisolierung gewährleistet ist, also keine punktuellen Heizzonen, sogenannte "Hot Spots" auftreten. Auch kann die Wärmeisolierschicht z.B. unter Tragflugbedingungen des Flugkörpers durch Vibrationen oder Scheuern beschädigt werden.

Aufgabe der Erfindung ist es, eine Wärmeisolierung der Schubdüse bereitzustellen, die bei dem vorgegebenen minimalen Bauraum eine Aufheizung der metallischen Außenstruktur sicher verhindert. DE 43 21 393 A1 offenbart die technischen Merkmale vom Oberbegriff vom unabhängigen Anspruch 1.

Dies wird erfindungsgemäß mit dem im Anspruch 1 gekennzeichneten Schubtriebwerk erreicht. In den Unteransprüchen sind vorteilhafte Ausgestaltungen der Erfindung angegeben.

Das erfindungsgemäße Schubtriebwerk wird insbesondere durch ein Raketen- oder Stautriebwerk gebildet. Der Raketentreibstoff kann fest oder flüssig sein, und der Treibstoff des Stautriebwerks flüssig oder gasförmig. Die Brennkammer ist vorzugsweise weitgehend zylinderförmig ausgebildet. Die Schubdüse besteht vorzugsweise aus hochtemperaturfestem keramischen Material.

Als Wärmeisolierung wird im Wesentlichen eine passiv arbeitende Hochtemperatur-Isolierung verwendet, also eine Wärmeisolierung, die im Gegensatz zu einer aktiven Isolierung den Wärmeübergang auf die Außenstruktur des Triebwerks nicht dadurch verhindert, dass sie abgebaut wird. Die Außenstruktur des Triebwerks besteht, wie üblich, normalerweise aus Metall.

Nach der Erfindung ist die passiv arbeitende Wärmeisolierung mit einer metallischen Außenummantelung versehen. Damit erfolgt eine Kammerung des Wärmeisolationsmaterials, die einerseits zu einer wesentlichen Vereinfachung bei der Montage führt und zum anderen eine sichere Positionierung des Wärmeisolationsmaterials gewährleistet. Eine Verschiebung des Wärmeisolationsmaterials z.B. durch Vibration beim Flug des Flugkörpers ist damit verhindert.

Die metallische Außenummantelung kann aus einem hitzebeständigen Stahl bestehen. Jedoch sind auch andere metallische Werkstoffe einsetzbar, beispielsweise Wolfram oder Molybdän bzw. Wolfram- oder Molybdänlegierungen. Als hitzebeständiger Stahl wird insbesondere Stahl mit einem hohen Nickelgehalt von mindestens 15 Gew.-%, beispielsweise ein Stahl mit ca. 20 Gew.-% Nickel, ca. 25 Gew.-% Chrom und ca. 2 Gew.-% Silizium verwendet. Geeignet sind z.B. auch Nickel-Basis-Legierungen wie Inconel®.

Die metallische Außenummantelung weist wegen des begrenzten Bauraums und aus Gründen der Massenreduzierung zwischen Schubdüse und Außenstruktur eine möglichst geringe Schichtdicke auf. So sollte die Dicke der Außenummantelung nicht mehr als 0,5 mm betragen. Die metallische Außenummantelung wird vorzugsweise durch eine Metallfolie gebildet. Da die Metallfolien nach dem Einlegen der Wärmeisolierung in die Metallfolie miteinander verschweißt werden, müssen die Metallfolien eine gewisse Mindestdicke besitzen, um geschweißt werden zu können. Die Mindestdicke der Metallfolie beträgt daher vorzugsweise 0,05 mm, insbesondere 0,1 mm.

Die metallische Außenummantelung weist vorzugsweise eine Profilierung auf. Dadurch wird die Kontaktfläche und damit der Wärmeübergang durch Wärmeleitung zwischen der metallischen Außenummantelung und der Außenstruktur des Triebwerks reduziert. Die Profilierung kann beispielsweise durch über die Außenummantelung verteilte, z.B. durch Prägen der Metallfolie gebildete vorstehende Noppen oder dergleichen Bereiche gebildet sein, die sich an der Innenseite der Außenstruktur abstützen. Außerhalb der Noppen oder dergleichen vorspringende Bereiche, die die Außenstruktur berühren, wird damit zugleich eine Luftschicht zwischen Metallfolie und Außenstruktur gebildet, die eine zusätzliche Wärmeisolierung darstellt.

Da ein erheblicher Teil des Wärmeübergangs durch Wärmestrahlung erfolgt, ist die metallische Außenummantelung vorzugsweise verspiegelt. Dazu kann eine verspiegelte Metallfolie verwendet werden. Um die Wärmestrahlung zu reflektieren, kann die Metallfolie beispielsweise durch Polieren verspiegelt sein. Die Noppen und dergleichen vorspringende Bereiche können dann anschließend in die Metallfolie geprägt werden. Das Verspiegeln kann jedoch beispielsweise auch durch Vergolden, Versilbern, Verchromen oder Vernickeln der Metallfolie erfolgen.

Die Wärmeisolierung besteht vorzugsweise aus mehreren schalenförmigen, d.h. im Querschnitt kreisbogenförmigen Modulen, die die Schubdüse umschließen. Jedes Modul ist dabei mit einer metallischen Außenummantelung versehen, die so ausgebildet ist, wie vorstehend beschrieben. Dabei können als Module zwei Halbschalen vorgesehen sein, oder z.B. drei Module, die beispielsweise jeweils etwa 120 ° des Umfangs der Schubdüse umschließen.

Durch die Modulbausweise wird die Montage der erfindungsgemäßen Wärmeisolierung zusätzlich vereinfacht. Dies gilt insbesondere für Schubdüsen, die vom Düsenhals auch zum Brennraum hin, also in beide Richtungen divergieren.

Um das Auftreten von hot Spots an den Stellen zu verhindern, an denen benachbarte Module aneinander stoßen, sind die Module an den Endabschnitten, an denen sich zwei benachbarte Module berühren, verjüngt ausgebildet. Damit können sich die Endabschnitte zweier benachbarter Module überlappen, ohne dass Hot Spots gebildet werden. Die Verjüngung an den Endabschnitten der Module kann stetig sein, ggf. aber auch stufenförmig.

Die Wärmeisolierung weist vorzugsweise wenigstens eine Isolationsschicht aus einem mikroporösen Dämmstoff auf, der eine passiv arbeitende Hochtemperatur-Isolierung bildet. Mikroporöse Dämmstoffe sind im Handel erhältlich, beispielsweise unter der Marke "Minileit", und sind beispielsweise in DE 31 08 816 A1 beschrieben. Sie stellen einen Pressstoff dar, der aus einem mikroporösen Material beispielsweise porösen Titandioxid, Aluminiumoxid oder Siliziumdioxid und mineralischen oder Keramikfasern gebildet wird. Das mikroporöse Material kann beispielsweise durch Flammenhydrolyse gewonnen werden. Der Gewichtsanteil der Fasern an dem Pressstoff kann beispielsweise 10 bis 30 % betragen. Die Fasern können eine Länge von mehr als 10 mm aufweisen. Außer in Form von Pressformkörpern kann der mikroporöse Dämmstoff auch in Form von Platten oder Steppmatten eingesetzt werden.

Mikroporöse Dämmstoffe weisen eine extrem niedrige Wärmleitfähigkeit unterhalb der Leitfähigkeit ruhender Luft im Bereich von Raumtemperatur bis 1.000 °C auf. Die extrem geringe Leitfähigkeit ist auf die äußerst geringe Porengröße zurückzuführen, die kleiner als die mittlere freie Weglänge der Stickstoff- und Sauerstoffmoleküle der Luft ist, die etwa 0,1 µm beträgt. Die Schichtdicke des mikroporösen Dämmstoffs beträgt vorzugsweise mindestens 1 mm, insbesondere mindestens 2 mm.

Mikroporöse Dämmstoffe sind allerdings gegenüber mechanischer Biegebeanspruchung anfällig. Durch eine Faserummantelung des mikroporösen Dämmstoffs kann der Gefahr einer mechanischen Beschädigung entgegengetreten werden. Der mikroporöse Dämmstoff ist daher vorzugsweise in ein Gewebe z.B. aus Glas- oder Keramikfasern eingenäht, um die erforderliche Flexibilität zu erhalten.

Allerdings unterliegen mikroporöse Dämmstoffe bei hohen Temperaturen von beispielsweise 1.100 °C und mehr einer thermischen Schädigung. Um die thermische Schädigungsrate zu reduzieren, ist erfindungsgemäß auf der Innenseite, also der der Schubdüse zugewandten Seite der mikroporösen Dämmstoffschicht eine Schutzfolie und/oder ein textiles Flächengebilde aus Keramikfasern und/oder KohlenstoffFasern zwischen der mikroporösen Dämmstoffschicht und der Außenummantelung angeordnet.

Die Schutzfolie kann eine Metallfolie, z.B. aus Silber oder Gold sein, die bei hoher Temperatur schmilzt, und/oder eine Graphitfolie, die sich bei hoher Temperatur zersetzt. Sie schützt den mikroporösen Dämmstoff insbesondere im Falle des Versagens der Außenummantelung.

Das flexible Flächengebilde kann ein Gewebe, Gewirke oder Vlies sein. Die Keramikfasern können beispielsweise aus Glas, Titandioxid, Aluminiumoxid oder Magnesiumoxid bestehen. Die Kohlenstofffasern können aus den unterschiedlichsten Kohlenstoff- oder Graphitwerkstoffen bestehen. Vorzugsweise wird ein Faserpapier eingesetzt. Eine besonders wirksame Wärmeisolierung wird erzielt, wenn die Schutzfolie zwischen dem textilen Flächengebilde und der metallischen Außenummantelung angeordnet ist. Die Metallfolie dient zugleich zum Schutz gegen Wärmestrahlung. Das flexible, textile Flächengebilde aus Keramikfasern wird bei hoher Temperatur verglast, und, wenn es aus Kohlenstofffasern besteht, werden diese bei hoher Temperatur zersetzt.

Durch die Schutzfolie und das textile Flächengebilde wird damit der Wärmeübergang von der Schubdüse zum mikroporösen Dämmstoff herabgesetzt und der mikroporöse Dämmstoff so für einige Minuten vor thermischer Schädigung geschützt.

Erfindungsgemäß wird also unter Ausnutzung des vorgegebenen minimalen Bauraums zwischen Schubdüse und Außenstruktur des Triebwerks die Aufheizung der Außenstruktur über ein Temperaturlimit hinaus bei einer Heizdauer von einigen Minuten verhindert. Während der Marschflugphase des Flugkörpers geht damit die Außenstruktur des Triebwerks im Düsenbereich nicht über eine bestimmte Grenztemperatur hinaus, sodass die Funktionsfähigkeit elektromechanischer Bauteile des Flugkörpers nicht beeinträchtigt wird und kein Festigkeitsabfall des Strukturwerkstoffs auftritt.

So wird bei einem Triebwerk, bei dem die Temperatur der Verbrennungsgase deutlich über 2.500 °C liegt, nach 120 Sekunden die Temperatur der metallischen Außenstruktur auf lediglich 450 °C erhöht, wenn erfindungsgemäß eine Außenummantelung aus einer polierten, profilierten Stahlfolie und eine Wärmeisolierung verwendet wird, die aus einer 2 mm dicken mikroporösen Dämmstoffschicht als äußerster Schicht, einem Keramikfaservlies als Zwischenschicht und einer Graphitfolie als der Schubdüse zugewandter, innerster Schicht besteht.

Die Erfindung ist insbesondere zur Wärmeisolierung der Außenstruktur im Bereich der Schubdüse bestimmt, jedoch auch zur Wärmeisolierung der Außenstruktur im Bereich der Brennkammer geeignet.

Nachstehend ist die Erfindung anhand der beigefügten Zeichnung beispielhaft näher erläutert. Darin zeigen jeweils schematisch:
- Figur 1: einen Längsschnitt durch die obere Hälfte eines Triebwerks im Bereich der Schubdüse;
- Figur 2: einen Längsschnitt durch die Wärmeisolierung zwischen Schubdüse und Außenstruktur nach Figur 1 nach einer ersten Ausführungsform der Erfindung;
- Figur 3: einen Längsschnitt durch die Wärmeisolierung zwischen Schubdüse und Außenstruktur nach Figur 1 nach einer zweiten Ausführungsform der Erfindung;
- Figur 4 und 5: einen Querschnitt durch eine Wärmeisolierung in Modulbauweise bzw. den vergrößerten Ausschnitt A mit den sich überlappenden Enden zweier Module.

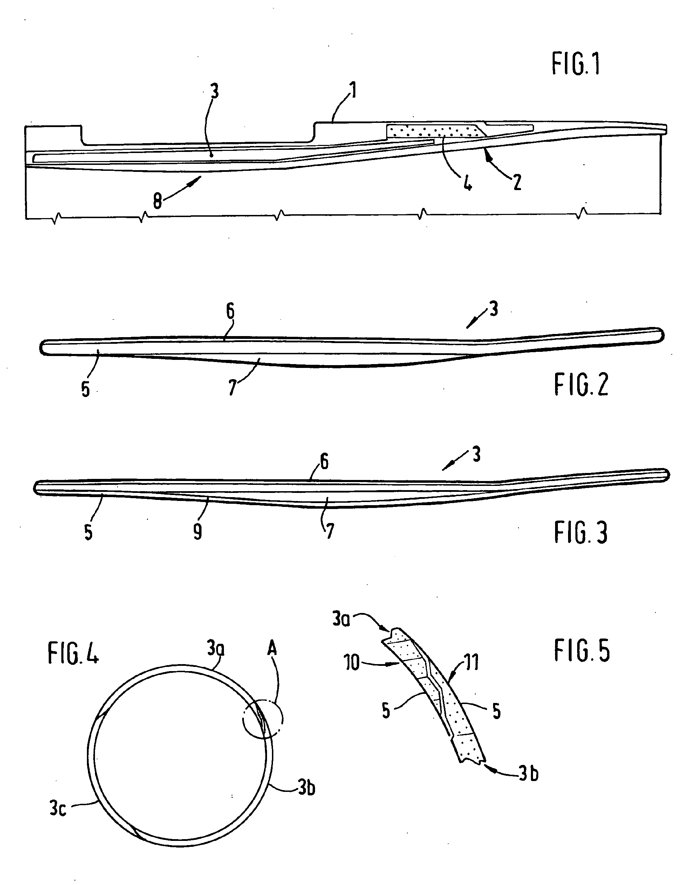

Gemäß Figur 1 weist das Triebwerk eine metallische Außenstruktur 1 und eine Schubdüse 2 aus Keramik auf. Zwischen der Schubdüse 2 und der Außenstruktur 1 sind zwei Wärmeisolierungen 3 und 4 vorgesehen.

Die Wärmeisolierung 3 weist gemäß Figur 2 eine Außenummantelung 5 aus einer Metallfolie auf. Die von der Metallfolie ummantelte Wärmeisolierung 3 besteht aus einer der Außenstruktur 1 des Triebwerks zugewandten äußeren Schicht 6 aus einem mikroporösen Dämmstoff mit einer gleichmäßigen Dicke von beispielsweise 2 mm und einer der Düse 2 zugewandten inneren Schicht 7 aus einem textilen Flächengebilde aus Keramikfasern, beispielsweise Keramikfaser-Papier. Die Dicke der Schicht 7 nimmt vom Halsbereich 8 der Schubdüse 2, wo die höchste Temperaturbelastung auftritt, in Axialrichtung des Triebwerks in beiden Richtungen ab. Dazu kann die Schicht 7 aus mehreren Einzellagen aus Keramikfaser-Papier bestehen.

Bei der Ausführungsform nach Figur 3 ist gegenüber der nach Figur 2 noch eine Schutzfolie 9 an der der Düse 2 zugewandten Seite der Keramikfaserschicht 7 vorgesehen.

Die Wärmeisolierung 4, die außerhalb des Halsbereichs 8 der Schubdüse 2 liegt, kann in gleicher Weise ausgebildet sein. Vorzugsweise weist jedoch die Wärmeisolierung 3 im Halsbereich 8 den Schichtaufbau nach Figur 3 und die Wärmeisolierung 4 den Schichtaufbau nach Figur 2 auf.

Gemäß Figur 4 besteht die Wärmeisolierung 3 aus drei Modulen 3a, 3b und 3c, die im Querschnitt kreisbogenförmig ausgebildet sind. Wie aus Figur 5 ersichtlich, sind die Endabschnitte 10, 11 der Module 3a und 3b verjüngt ausgebildet und überlappen einander.

## Patentansprüche

1. Triebwerk mit einer Schubdüse (2), einer Brennkammer und einer Wärmeisolierung (3, 4) zwischen der Außenstruktur (1) und der Schubdüse (2) und/oder der Brennkammer, wobei die Wärmeisolierung (3,4) wenigstens eine Schicht (6) aus einem mikroporösen Dämmstoff und eine, der Schubdüse (2) zugewandte innere Schicht (7) umfasst, **dadurch gekennzeichnet, dass** die Wärmeisolierung (3, 4) eine verspiegelte, mit einer Profilierung versehene metallische Außenummantelung (5) aufweist, durch die die Wärmeisolierung (3,4) in einer Kammer eingeschlossen ist.

2. Triebwerk nach Anspruch 1, **dadurch gekennzeichnet, dass** die Wärmeisolierung (3, 4) aus im Querschnitt kreisbogenförmigen Modulen (3a, 3b und 3c) besteht, die jeweils mit einer metallischen Außenummantelung (5) versehen sind.

3. Triebwerk nach Anspruch 1, **dadurch gekennzeichnet, dass** die mikroporöse Dämmstoffschicht (6) mit einer Faserummantelung versehen ist.

4. Triebwerk nach Anspruch 1, **dadurch gekennzeichnet, dass** zwischen der mikroporösen Dämmstoffschicht (6) und der metallischen Außenummantelung (5) auf der Innenseite der mikroporösen Dämmstoffschicht (6) eine Schicht (7) aus einem textilen Flächengebilde aus Keramik und/oder Kohlenstofffasern angeordnet ist.

5. Triebwerk nach Anspruch 1, **dadurch gekennzeichnet, dass** zwischen der mikroporösen Dämmstoffschicht (6) und der metallischen Außenummantelung (5) auf der Innenseite der mikroporösen Dämmstoffschicht (6) eine Schutzfolie (9) angeordnet ist.

6. Triebwerk nach Anspruch 3 und 4, **dadurch gekennzeichnet, dass** die Schutzfolie (9) zwischen der Schicht (7) aus dem textilen Flächengebilde und der metallischen Außenummantelung (5) angeordnet ist.

7. Triebwerk nach Anspruch 2, **dadurch gekennzeichnet, dass** die Module (3a, 3b und 3c) sich verjüngende Endabschnitte (10, 11) aufweisen und sich die verjüngenden Endabschnitte (10, 11) zweier benachbarter Module überlappen.

## Claims

1. A propulsion unit having a thrust nozzle (2), a combustion chamber and a thermal insulation (3, 4) between the outer structure (1) and the thrust nozzle (2) and/or the combustion chamber, wherein the thermal insulation (3, 4) comprises at least one layer (6) of a microporous insulation material and an inner layer (7) facing the thrust nozzle (2), **characterized in that** the thermal insulation (3, 4) has a reflective metal outer sheath (5) provided with a pattern by means of which the thermal insulation (3, 4) is encased in a chamber.

2. The propulsion unit according to claim 1, **characterized in that** the thermal insulation (3, 4) consists of modules (3a, 3b and 3c) which are arc-shaped in cross section and which are each provided with a metal outer sheath (5).

3. The propulsion unit according to claim 1, **characterized in that** the microporous insulation layer (6) is provided with a fibre sheath.

4. The propulsion unit according to claim 1, **characterized in that**, between the layer (6) and the metal outer sheath (5), a layer (7) of a textile area-measured material made of ceramic and/or carbon fibres is arranged on the inside of the microporous insulation layer (6).

5. The propulsion unit according to claim 1, **characterized in that**, between the microporous insulation layer (6) and the metal outer sheath (5), a protective film (9) is arranged on the inside of the microporous insulation layer (6).

6. The propulsion unit according to claim 3 or 4, **characterized in that** the protective film (9) is arranged between the layer (7) of the textile area-measured material and the metal outer sheath (5).

7. The propulsion unit according to claim 2, **characterized in that** the modules (3a, 3b and 3c) have tapering end portions (10, 11), and that the tapering end portions (10, 11) of two adjacent modules overlap.

## Revendications

1. Moteur à réaction comportant une tuyère d'éjection (2), une chambre de combustion et une isolation thermique (3, 4) entre la structure extérieure (1) et la tuyère d'éjection (2) et/ou la chambre de combustion, l'isolation thermique (3, 4) comprenant au moins une couche de matière isolante (6) microporeuse et une couche intérieure (7) tournée vers la tuyère d'éjection (2), **caractérisé en ce que** l'isolation thermique (3, 4) présente une enveloppe extérieure (5) métallique réfléchissante pourvue d'un profilage, par laquelle l'isolation thermique (3, 4) est enfermée dans une chambre.

2. Moteur à réaction selon la revendication 1, **caractérisé en ce que** l'isolation thermique (3, 4) est constituée par des modules (3a, 3b et 3c) de section transversale en forme d'arc de cercle qui sont pourvus d'une enveloppe extérieure (5) métallique.

3. Moteur à réaction selon la revendication 1, **caractérisé en ce que** la couche de matière isolante (6) microporeuse est pourvue d'une enveloppe de fibres.

4. Moteur à réaction selon la revendication 1, **caractérisé en ce que** entre la couche isolante (6) microporeuse et l'enveloppe extérieure (5) métallique, une couche (7) en tissu de structure textile en céramique et/ou en fibres de carbone est agencée sur la face intérieure de la couche de matière isolante (6) microporeuse.

5. Moteur à réaction selon la revendication 1, **caractérisé en ce que** entre la couche isolante (6) microporeuse et l'enveloppe extérieure (5) métallique, une feuille de protection (9) est agencée sur la face intérieure de la couche de matière isolante (6) microporeuse.

6. Moteur à réaction selon les revendications 3 et 4, **caractérisé en ce que** la feuille de protection (9) est agencée entre la couche (7) en tissu de structure textile et l'enveloppe extérieure métallique (5).

7. Moteur à réaction selon la revendication 2, **caractérisé en ce que** les modules (3a, 3b et 3c) présentent des tronçons d'extrémité (10, 11) qui se rétrécissent et **en ce que** les tronçons d'extrémité (10, 11) qui se rétrécissent, de deux modules voisins, se chevauchent.
